# EUROPEAN PATENT APPLICATION

(11) **EP 2 535 999 A1**
(43) Date of publication of application: **19.12.2012**
(21) Application number: 11752922.2
(22) Date of filing: 09.03.2011
(51) Int. Cl.: H02J 3/46, G06Q 50/00, H02J 3/00

(54) **ELECTRIC POWER SUPPLY SYSTEM**

(30) Priority: 10.03.2010 JP 2010053469
(71) Applicant: Panasonic Corporation, Osaka 571-8501 (JP)
(72) Inventor: MISE, Atsushi, Osaka 540-6207 (JP); YONEDA, Satsuki, Osaka 540-6207 (JP)
(74) Representative: Müller-Boré & Partner Patentanwälte
(86) International application number: PCT/IB2011/000497
(87) International publication number: WO 2011/110923

(57) **Abstract**

An electric power supply system includes: a distributed power supply which is disposed in at least one of a first power consumer; a power line which supplies the surplus power generated in the distributed power supply to at least one of a second power consumer; and a management device which manages the trade price of the surplus power supplied via the power line. The management device determines the trade price of the surplus power for following days on the basis of a prediction value for the amount of surplus power in the first electric power consumer unit and a prediction value for the amount of electric power consumption in the second electric power consumer unit over the following days.

## Description

### Field of the Invention

The present invention relates to an electric power supply system which performs power supply between a power consumer having a distributed power source and a power consumer without a distributed power source.

### Background of the Invention

Japanese Patent Application Publication No. 2006-191748 (JP2006-191748A) discloses a conventional electric power supply system. In the conventional system, a group of first power consumers each having a distributed power source, such as a photovoltaic power generation system, and a group of second power consumers without the distributed power source are connected to a common electrical grid, and accordingly, a surplus power generated in the distributed power sources of the first power consumers are supplied to the second power consumers via the common electrical grid as well as balance of power supply between the first and second power consumers is managed entirely by a power control device.

In the conventional electric power supply system described in JP2006-191748A, an electricity meter separately measures the amounts of surplus powers supplied from the first power consumers to the common electrical grid and the amounts of required powers supplied from the common electrical grid to the second power consumers, and the power control device collects the measurement values. Then, the power control device calculates a selling price of the surplus power supplied from the first power consumers to the common electrical grid and a purchase price of the required power supplied from the common electrical grid to the second power consumers on the basis of a predetermined trade price.

However, the conventional system determines the purchase price and the selling price based on the predetermined trade price regardless of the balance between supply and demand of the surplus power and the required power which change daily, and thus price advantages to the first and second power consumers may decrease.

### Summary of the Invention

In view of the above, the present invention provides an electric power supply system capable of improving price advantages in trading a surplus power between electric power consumers.

In accordance with an embodiment of the present invention, there is provided an electric power supply system including: a distributed power source provided at one or more first power consumers; a power line to supply a surplus power generated by the distributed power source to one or more second power consumers; and a management device to manage a trade price of the surplus power supplied via the power line. The management device determines the trade price of the surplus power for one or more following days based on a prediction value of a surplus power amount of the first power consumer and a prediction value of a required power amount of the second power consumer for the one or more following days.

The management device may determine the trade price of the surplus power for the one or more following days based on a total prediction value of the surplus power amount of the first power consumer having an intention to sell a power and a total prediction value of the required power amount of the second power consumer having an intention to purchase a power.

The electric power supply system may further include terminal units provided at the first power consumer and the second power consumer, respectively, and conducting data communications with the management device. The management device preferably predicts a power generation amount of the distributed power source and required power amounts of the first power consumer and the second power consumer for the one or more following days, calculates the prediction value of the surplus power amount of the first power consumer for the one or more following days based on the predicted amounts, and notifies the terminal unit at the first power consumer of the prediction value of the surplus power amount through the data communications.

The terminal unit of the first power consumer preferably offers the prediction value of the surplus power amount from the management device to the first power consumer and notifies the management device of confirmation information on an intention of the first power consumer to sell a power through the data communications.

The management device may calculate the total prediction value of the surplus power amount of the first power consumer having the intention to sell the power and the total prediction value of the required power amount of the second power consumer having the intention to purchase the power based on the confirmation information from the terminal unit of the first power consumer, determine the trade price of the surplus power for the one or more following days based on the total prediction value of the surplus power amount and the total prediction value of the required power amount, and notify the terminal units of the first and second power consumers of the trade price through the data communications.

The terminal units of the first and second power consumers may offer the trade price transmitted from the management device to the first and second power consumers and notifies the management device of information on decisions to sell and purchase the power by the first and second power consumers through the data communications.

The distributed power source preferably includes a power generation equipment of a photovoltaic power generation system or a wind power generation system which uses a natural energy.

The management device may adjust the trade price based on a difference between the total prediction value of the surplus power amount and a total required power amount actually supplied to the second power consumer on the one or more following days.

The terminal unit of the second power consumer may offer a purchase price of a commercial power supplied from an electricity company to the second power consumer and notify the management device of seller determination information presenting which one will be purchased among the surplus power and the commercial power through the data communications, and the management device may determine the purchase price with respect to the second power consumer based on the seller determination information.

The terminal unit of the first power consumer may offer to the first power consumer a selling price when the first power consumer sells the surplus power to an electricity company and notify the management device of purchaser determination information presenting where the surplus power will be sold among the electricity company and the second power consumer through the data communications, and the management device may determine the selling price with respect to the first power consumer based on the purchaser determination information.

The management device may change the trade price based on the information on the decisions from the terminal units of the first and second power consumers and notifies the terminal units at the first and second power consumers of the changed trade price through the data communications, and the terminal units may offer the changed trade price from the management device to the first and second power consumers and notify the management device of information on decisions to sell and purchase the power made by the first and second power consumer through the data communications.

The present invention improves price advantages in trading surplus power between electric power consumers.

### Brief Description of the Drawings

The objects and features of the present invention will become apparent from the following description of preferred embodiments given in conjunction with the accompanying drawings, in which:
Fig. 1 is a block diagram showing a schematic configuration of an electric power supply system in accordance with an embodiment of the present invention;
Fig. 2 is a block diagram showing a terminal unit in accordance with the embodiment of the present invention; and
Fig. 3 is a flowchart showing processes of an operation processing unit of the management device in accordance with the embodiment of the present invention.

### Detailed Description of the Embodiments

Hereinafter, embodiments of the present invention will be described with reference to the accompanying drawings which form a part thereof. Throughout the drawings, like reference numerals will be given to like parts, and redundant description thereof will be omitted.

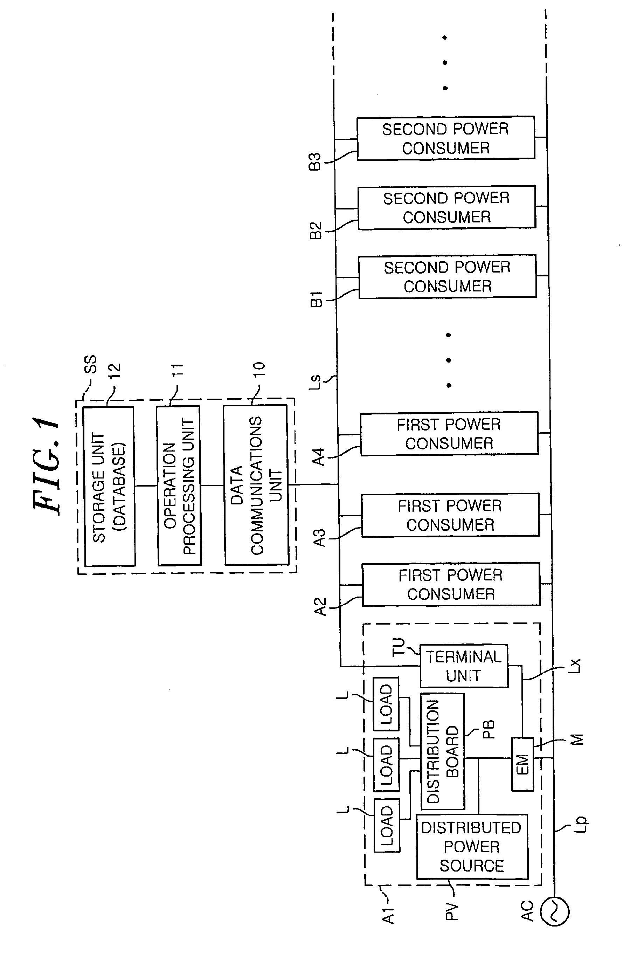

Fig. 1 is a block diagram showing a schematic configuration of an electric power supply system in accordance with the embodiment of the present invention. A commercial power, e.g., 100V/200V single-phase AC, is supplied from a electrical grid AC of an electricity company to electric power consumers via a power line Lp. Here, among the electric power consumers, electric power consumers having a distributed power source PV and selling an electric power are referred to as first power consumers A1, A2, and the like, and electric power consumers without the distributed power source PV and purchasing an electric power are referred to as second power consumers B1, B2 and the like.

Here, each of the first power consumers A1, A2 and the like is expressed as a first power consumer Ai (i=1, 2, ...), while each of the second power consumers B1, B2 and the like are expressed as a second power consumer Bj (j=1, 2, ...). Further, all of the first power consumers A1, A2 and the like is referred to as a first power consumer group Ai, while all of the second power consumers B1, B2 and the like are referred to as a second power consumer group Bj.

An electricity meter (EM) M, a distribution board PB, loads L, a distributed power source PV and a terminal unit TU are installed at each of the first power consumers Ai. Further, although not shown, an electricity meter M, a distribution board PB, loads L and a terminal unit TU are installed at each of the second power consumers Bj except for a distributed power source PV.

The electricity meter M measures the amount of power flowing from the power line Lp to the distribution board PB (hereinafter, referred to as a "downward power amount") and the amount of power reversely flowing from the distributed power source PV to the power line Lp (hereinafter, referred to as a "upward power amount") separately and transmits the measurement values to the terminal unit TU via a transmission line Lx. The electricity meter M is generally known in the art, and thus a detailed description and illustration thereof are omitted herein.

The distribution board PB includes a main breaker (not shown) and branch breakers (not shown) accommodated in a box and divergingly distributes a power supplied from the electrical grid AC or the distributed power source PV to the loads L.

The distributed power source PV is formed of a generally known grid-connected photovoltaic power generation system including a solar cell, a power conditioner, a switch or the like, and reverse flow of power (selling power) to the power line Lp is executed/stopped by the power conditioner. Further, the distributed power source PV may be any power generation equipments using natural energy, e.g., a wind power generation system, without being limited to the photovoltaic power generation system.

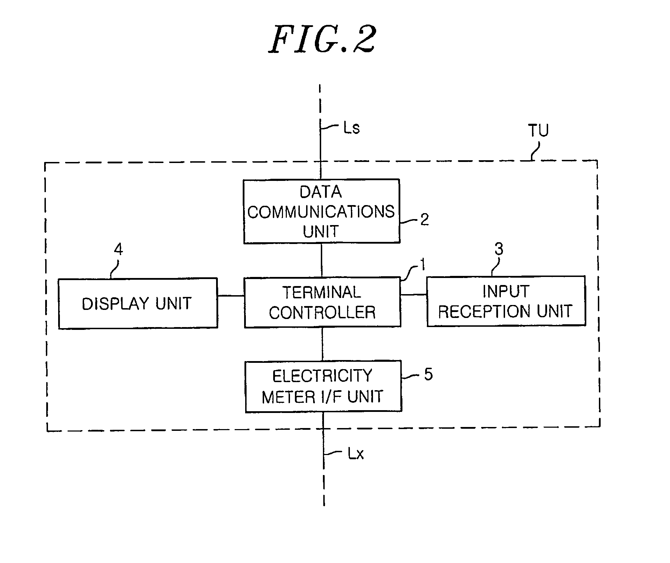

As shown in Fig. 2, the terminal unit TU includes a terminal controller 1, a data communications unit 2, an input reception unit 3, a display unit 4 and an electricity meter interface (I/F) unit 5. The data communications unit 2 conducts data communications with a management device SS via a communications line Ls. The electricity meter I/F unit 5 receives data of a measurement value transmitted from the electricity meter M via the transmission line Lx and outputs the data of the measurement value to the terminal controller 1 in accordance with a general serial communications interface (RS232C or RS458). The terminal controller 1 is configured with a CPU, a memory and the like and transmits the data of the measurement value received from the electricity meter I/F unit 5 to the management device SS via the data communications unit 2 and the communications line Ls.

The display unit 4 includes a display device, e.g., an LCD monitor, and a drive circuit of the display device to display various types of information (to be mentioned later) on the LCD monitor under control of the terminal controller 1. The input reception unit 3 includes a touch panel paired with the display device of the display unit 4 and outputs an input received through the touch panel to the terminal controller 1. Here, the data communications unit 2, the input reception unit 3, the display unit 4 and the electricity I/F unit 5 are generally known in the art, and thus detailed description and illustration thereof will be omitted herein.

As shown in Fig. 1, the management device SS includes a data communications unit 10, an operation processing unit 11 and a storage unit 12. The data communications unit 10 conducts data communications with the data communications unit 2 of the terminal unit TU via the communications line Ls. The storage unit 12 is formed with a high-capacity storage device, such as a hard disk and stores a database to manage information on all power consumers (the first power consumers Ai and the second power consumers Bj). In the database, items (fields) including a prediction value of required power amount, a prediction value of power generation amount (only in the first power consumer group Ai), a prediction value of surplus power amount (only in the first power consumer group Ai), an intention of power sale (only in the first power consumer group Ai), an intention of power purchase (only in the second power consumer group Bj), a result value of power sale amount (only in the first power consumer group Ai), and a result value of power purchase amount (only in the second power consumer group Bj) are set for each identification code (ID) allocated to each power consumer.

The prediction value of required power amount is a prediction value of the amount of power consumed by the loads L of each power consumer for the following day. The prediction value of power generation amount is a predication value of the amount of a power generated by the distributed power source PV of the first power consumer Ai for the following day. Further, the prediction value of surplus power amount is the amount of electric power obtained by subtracting the prediction value of the required power amount of the first power consumer Ai for the following day from the prediction value of the power generation amount by the first power consumer Ai for the following day.

The operation processing unit 11 of the management device SS predicts the power generation amount for the following day based on the estimated maximum temperature or the estimated amount of solar radiation for the following day obtained, through the Internet, from websites (e.g., the homepage of the Meteorological Administration or a local weather center) which provide meteorological information , such as a weather forecast or the like and the power generation capacity of each distributed power source PV. Further, the operation processing unit 11 predicts the required power amount for the following day based on records of previous power consumption by each of power consumers (the first power consumers Ai and the second power consumers Bj) and weather information. However, there are various methods to predict the power generation amount or the required power amount, without being limited to the foregoing method.

Further, "the intention of power sale" is an intention about whether or not to provide (sell) the surplus power to the second power consumer group Bj when a prediction value of the surplus power amount for a following day is greater than zero and is selectively made base on an input through the input reception unit 3 of the terminal unit TU installed at the first power consumer group Ai. Likewise, "the intention of power purchase" is an intention about whether or not to receive (purchase) the surplus power from the first power consumer group Ai when a prediction value of the surplus power amount for the following day is greater than zero and is selectively made based on an input through the input reception unit 3 of the terminal unit TU installed at the second power consumer group Bj.

In addition, "the result value of power sale amount" is a measurement value by each electricity meter M installed at the first power consumer group Ai (the upward power amount) and is the amount of electric power provided (sold) from the first power consumer group Ai to the second power consumer group Bj. Likewise, "the result value of power purchase amount" is a measurement value by each electricity meter M installed at the second power consumer group Bj (the downward power amount) and is the amount of electric power received (purchased) by the second power consumer group Bj from the first power consumer group Ai. The result value of power sale amount and the result value of power purchase amount are also calculated by the operation processing unit 11 of the management device SS based on measurement values by the electricity meters M installed at the respective power consumers Ai and Bj.

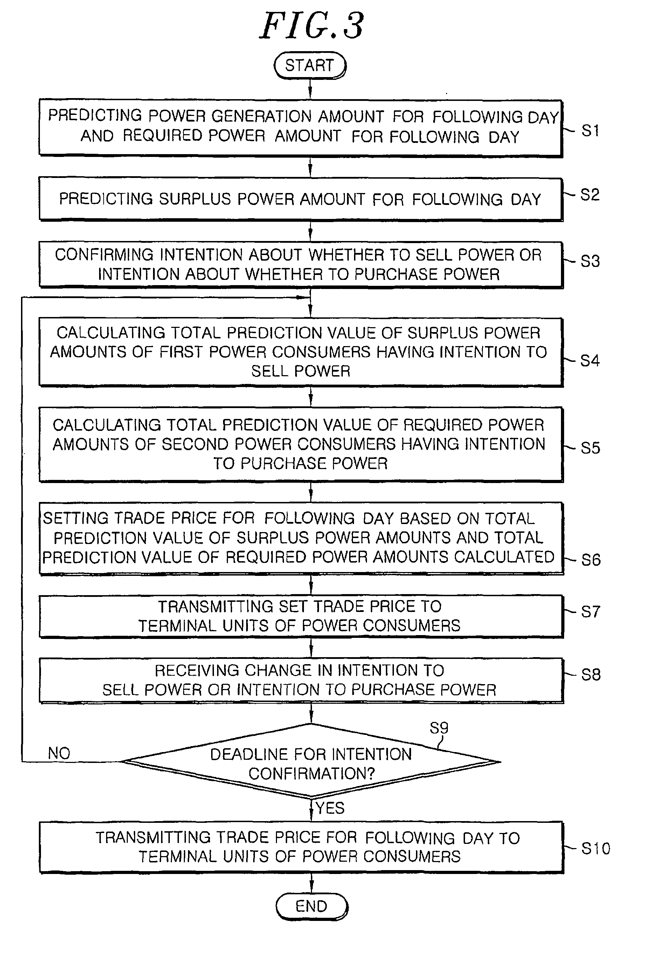

Hereinafter, processes of the operation processing unit 11 of the management device SS in accordance with the present embodiment will be described with reference to the flowchart in Fig. 3.

First, the operation processing unit 11 of the management device SS predicts the power generation amount for the following day by the distributed power source PV installed at the first power consumer Ai and the required power amount for the following day by the loads L of each of the first power consumer Ai and the second power consumer Bj at a particular time (e.g., at 8 pm) every day in step S1. Then, the operation processing unit 11 predicts the surplus power amount of each first power consumer Ai for the following day based on the prediction value of the power generation amount of each first power consumer Ai and the prediction value of the required power amount in step S2.

When the prediction value of the surplus power amount of the first power consumer Ai for the following day is greater than zero, the operation processing unit 11 of the management device SS transmits the prediction value of the surplus power amount and a confirmation request of an intention to sell power to the terminal unit TU of the first power consumer Ai through the data communications unit 10. In addition, the operation processing unit 11 transmits the prediction value of the required power amount by the second power consumer Bj and a confirmation request of an intention to purchase power to the terminal unit TU of the second power consumer Bj through the data communications unit 10 in step S3.

Further, in step S3, the display unit 4 of the terminal unit TU in the first power consumer Ai displays the prediction value of the surplus power amount for the following day and the confirmation request of the intention to sell power, which are received from the management device SS. Meanwhile, the display unit 4 of the terminal unit TU in the second power consumer Bj displays the prediction value of the required power amount for the following day and the confirmation request of the intention to purchase power, which are received from the management device SS. When the input reception units 3 of the terminal units TU in the power consumers Ai and Bj receive the intention about whether or not to sell power and the intention about whether or not to purchase power, the information on the intention to sell power and the information on the intention to purchase power are transmitted from the data communications units 2 of the terminal units TU of the power consumer Ai and the power consumer Bj to the management device SS via the communications line Ls, respectively.

The operation processing unit 11 of the management device SS stores the information on the intention to sell power and the information on the intention to purchase power received by the data communications unit 10 in a field of the intention of power sale and a field of the intention of power purchase of the respective power consumers Ai and Bj of the database. Then, the operation processing unit 11 calculates a total prediction value of surplus power amounts of the first power consumers Ai which have intentions to sell powers with reference to the database in step S4 and also calculates a total prediction value of required power amounts of the second power consumers Bj which have intentions to purchase power in step S5.

Further, the operation processing unit 11 sets a trade price for the following day based on the total prediction value of the surplus power amounts and the total prediction value of the required power amounts calculated at step S5, in step S6 and transmits the set trade price to the terminal units TU of the respective power consumers Ai and Bj through the data communications unit 10 in step S7.

Herein, when the total prediction value of the surplus power amounts of the first power consumers Ai having the intentions to sell power is greater than the total prediction value of the required power amounts of the second power consumers Bj having the intentions to purchase power (in excess of supply), the operation processing unit 11 sets the trade price to a relatively low level. On the contrary, when the total prediction value of the surplus power amounts is less than the total prediction value of the required power amounts (in excess of demand), the operation processing unit 11 sets the trade price to a relatively high level.

However, the respective power consumers Ai and Bj may change the intention to sell power or the intention to purchase power in view of the trade price which is received from the management device SS and displayed on the display units 4 of the terminal units TU. In this case, when the input reception unit 3 of the terminal unit 3 of the power consumer Ai or Bj receives a changed intention to sell power or a changed intention to purchase power, information on the intention to sell power or to purchase power is transmitted from the data communications unit 2 of the corresponding terminal unit TU to the management device SS via the communications line Ls in step S8.

The operation processing unit 11 of the management device SS repeats steps S4 to S8 by the deadline (e.g., by 11 pm) for intention confirmation of step S9. Then, the operation processing unit 11 determines the trade price for the following day after the deadline and transmits the determined trade price to the terminal units TU of the respective power consumers Ai and Bj through the data communications unit 10 in step S10.

As described above, in accordance with the present embodiment, the management device SS predicts the surplus power amount of the first power consumer group Ai having the distributed power sources PV for the following day and the required power amount of the second power consumer group Bj without a distributed power source PV for the following day and sets the trade price for the following day based on the predictions values. Further, the trade price is adjusted based on the intentions to sell power made by the first power consumer group Ai and the intentions to purchase power made by the second power consumer group Bj, the intentions being made based on the trade price. Thus, as compared with the conventional electric power supply system, the system of the present invention is capable of improving price advantages in trading a surplus power between the power consumers Ai and Bj.

However, the total predication value of the surplus power amount of the first power consumer group Ai (the total predication value of the surplus power amount for a particular day stored in the database) may not correspond to the total required power amount (purchased power amount) actually supplied to the second power consumer group Bj (the total result value of power purchase amount for the particular day).

Further, when an electric power is actually supplied, the length of an electric circuit (the length of the power line Lp) is not uniform. For example, when the first power consumers A1 and A2 supply surplus powers to the second power consumer B1, the length of the power line Lp from the first power consumer A1 to the second power consumer B1 is considerably longer than the length of the power line Lp from the first power consumer A2 to the second power consumer Bl. In this case, the first power consumer A1 having a longer length of the power line Lp to the second power consumer B1 is placed in an unfavorable situation in supplying an electric power as compared with the first power consumer A2, because an electric circuit having a greater length involves greater voltage drop in the power line Lp due to electric resistance and needs to transmit a power at a relatively high voltage.

Thus, when the total amount of power actually purchased is less than the total prediction value of the surplus power amount, the operation processing unit 11 of the management device SS distributes a total trade price obtained by multiplying the total purchased power amount by the trade price (unit price) to the first power consumer group Ai according to a ratio of the prediction value of surplus power amount of each first power consumer Ai to the total prediction value of the surplus power amount. On the contrary, when the total prediction value of the surplus power amount is less than the total amount of power actually purchased, the operation processing unit 11 of the management device SS distributes total trade price obtained by multiplying the total amount of power actually sold by the first power consumer group Ai stored in the database by the trade price (unit price) to the second power consumer group Bj according to a ratio of the predicted value of required power amount of each second power consumer Bj to the total prediction value of the required power amounts. In this way, the first power consumer group Ai or the second power consumer group Bj can get or pay the total trade price fairly.

As described above, when a difference between the total prediction value of the surplus power amount and the total actually required power amount (the actually purchased power amount) continues to occur for a long time (e.g., on week), it is preferable that the operation processing unit 11 of the management device SS adjusts the trade price based on a difference between the total prediction value of the surplus power amount and the total actually required power amount.

For example, as a difference obtained by subtracting the total actually required power amount from the total prediction value of the surplus power amount increases, the operation processing unit 11 lowers the trade price. Further, as the difference obtained by subtracting the total prediction value of the surplus power amount from the total actually required power amount increases, the operation processing unit 11 raises the trade price. The trade price is adjusted in this manner to increase the number of power consumers (the first power consumer Ai or the second power consumer Bj) having an intention to sell power or an intention to purchase power, thus raising the surplus power amount sold by the first power consumer group Ai to the second power consumer group Bj or the required power amount purchased by the second power consumer group Bj from the first power consumer group Ai thereby reducing a power not traded but wasted.

However, it is possible that the second power consumer group Bj is supplied with a power (purchases a power) from the electrical grid AC of the electricity company, instead of being supplied with the surplus power from the first power consumer group Ai. Here, the management device SS notifies the terminal unit TU of the second power consumer group Bj of the purchase price (electric charge) of the power purchased from the electricity company, and the display unit 4 of the terminal unit TU displays (offers) the purchase price. When the input reception unit 3 of the terminal unit TU in the second power consumer Bj receives a determination on a seller selected among the first power consumer Ai and the electricity company, the determination on the seller is transmitted to the management device SS from the data communications unit 2 of the terminal unit TU via the communications line Ls.

The operation processing unit 11 of the management device SS determines the trade price of the surplus power based on the determination on the seller received through the data communications unit 10. In detail, when second power consumers Bj which selected the first power consumer Ai as the seller are more than those which selected the electricity company as the seller, the operation processing unit 11 sets the trade price of the surplus power to a high level. When second power consumers Bj which selected the electricity company as the seller are more than those which selected the first power consumer Ai as the seller, the operation processing unit 11 sets the trade price of the surplus power to a low level.

In this way, the trade price of the surplus power is adjusted, thereby reducing electric power not traded but wasted.

Further, it is possible that the first power consumer group Ai allows a surplus power to reversely flow (sells a surplus power) to the electrical grid AC of the electricity company, instead of supplying the surplus power to the second power consumer group Bj. Here, the management device SS notifies the terminal unit TU of the first power consumer group Ai of the selling price of the power sold to the electricity company, and the display unit 4 of the terminal unit TU displays (presents) the selling price. When the input reception unit 3 of the terminal unit TU of the first power consumer group Ai receives a determination on a purchaser selected among the second power consumer group Bj and the electricity company, the determination on the purchaser is transmitted to the management device SS from the data communications unit 2 of the terminal unit TU via the communications line Ls.

The operation processing unit 11 of the management device SS determines the trade price of the surplus power based on the determination on the purchaser received through the data communications unit 10. In detail, when first power consumers Ai which selected the second power consumer Bj as the purchaser are more than those which selected the electricity company as the purchaser, the operation processing unit 11 sets the trade price of the surplus power to a relatively low level. When first power consumers Ai which selected the electricity company as the purchaser are more than those which selected the second power consumer Bj, the operation processing unit 11 sets the trade price of the surplus power to a relatively high level.

In this ways, the trade price of the surplus power is adjusted, thereby reducing electric power not traded but wasted. Although the operation processing unit 11 of the management device SS predicts the surplus power amount and the required power amount only for the following day in the present embodiment, it can predict the surplus power amount and the required power amount, e.g., for from the day after tomorrow to up to the following one week based on weather forecasts for the week in the same manner.

While the invention has been shown and described with respect to the embodiments, it will be understood by those skilled in the art that various changes and modification may be made without departing from the scope of the invention as defined in the following claims.

## Claims

1. An electric power supply system comprising:
a distributed power source provided at one or more first power consumers;
a power line to supply a surplus power generated by the distributed power source to one or more second power consumers; and
a management device to manage a trade price of the surplus power supplied via the power line,
wherein the management device determines the trade price of the surplus power for one or more following days based on a prediction value of a surplus power amount of the first power consumer and a prediction value of a required power amount of the second power consumer for the one or more following days.

2. The electric power supply system of claim 1, wherein the management device determines the trade price of the surplus power for the one or more following days based on a total prediction value of the surplus power amount of the first power consumer having an intention to sell a power and a total prediction value of the required power amount of the second power consumer having an intention to purchase a power.

3. The electric power supply system of claim 2, further comprising terminal units provided at the first power consumer and the second power consumer, respectively, and conducting data communications with the management device,
wherein the management device predicts a power generation amount of the distributed power source and required power amounts of the first power consumer and the second power consumer for the one or more following days, calculates the prediction value of the surplus power amount of the first power consumer for the one or more following days based on the predicted amounts, and notifies the terminal unit at the first power consumer of the prediction value of the surplus power amount through the data communications,
the terminal unit of the first power consumer offers the prediction value of the surplus power amount from the management device to the first power consumer and notifies the management device of confirmation information on an intention of the first power consumer to sell a power through the data communications,
the management device calculates the total prediction value of the surplus power amount of the first power consumer having the intention to sell the power and the total prediction value of the required power amount of the second power consumer having the intention to purchase the power based on the confirmation information from the terminal unit of the first power consumer, determines the trade price of the surplus power for the one or more following days based on the total prediction value of the surplus power amount and the total prediction value of the required power amount, and notifies the terminal units of the first and second power consumers of the trade price through the data communications, and
the terminal units of the first and second power consumers offer the trade price transmitted from the management device to the first and second power consumers and notifies the management device of information on decisions to sell and purchase the power by the first and second power consumers through the data communications.

4. The electric power supply system of claim 3, wherein the distributed power source includes a power generation equipment of a photovoltaic power generation system or a wind power generation system which uses a natural energy.

5. The electric power supply system of claim 3 or 4, wherein the management device adjusts the trade price based on a difference between the total prediction value of the surplus power amount and a total required power amount actually supplied to the second power consumer on the one or more following days.

6. The electric power supply system of any one of claims 3 to 5, wherein the terminal unit of the second power consumer offers a purchase price of a commercial power supplied from an electricity company to the second power consumer and notifies the management device of seller determination information presenting which one will be purchased among the surplus power and the commercial power through the data communications, and the management device determines the purchase price with respect to the second power consumer based on the seller determination information.

7. The electric power supply system of any one of claims 3 to 6, wherein the terminal unit of the first power consumer offers to the first power consumer a selling price when the first power consumer sells the surplus power to an electricity company and notifies the management device of purchaser determination information presenting where the surplus power will be sold among the electricity company and the second power consumer through the data communications, and the management device determines the selling price with respect to the first power consumer based on the purchaser determination information.

8. The electric power supply system of any one of claims 3 to 7, wherein the management device changes the trade price based on the information on the decisions from the terminal units of the first and second power consumers and notifies the terminal units at the first and second power consumers of the changed trade price through the data communications, and the terminal units offer the changed trade price from the management device to the first and second power consumers and notify the management device of information on decisions to sell and purchase the power made by the first and second power consumer through the data communications.
